# EUROPEAN PATENT APPLICATION

(11) **EP 3 223 223 A1**
(43) Date of publication of application: **27.09.2017**
(21) Application number: 16207134.4
(22) Date of filing: 28.12.2016
(51) Int. Cl.: G06Q 30/02

(54) **APPARATUS, METHOD AND RECORDING MEDIUM FOR PROVIDING ADVERTISEMENT**

(30) Priority: 23.03.2016 KR 20160034661
(71) Applicant: SK Planet Co., Ltd., Seongnam-si, Gyeonggi-do 13487 (KR)
(72) Inventor: Kim, Jiyeon, Seoul 08749 (KR); Kim, Shinmyung, Seoul 06549 (KR)
(74) Representative: Isarpatent

(57) **Abstract**

An apparatus, method and recording medium for providing an advertisement are disclosed. The apparatus receives, from an advertiser terminal apparatus, registration of a product to be advertised, an allowable budget, and an advertising period, and sets a charging unit price per customer group as to the registered product. The apparatus transmits the charging unit price per customer group to the advertiser terminal apparatus and then receives a selection of a target customer group and a charging unit price from the advertiser terminal apparatus. Also, the apparatus calculates an advertisement exposure frequency, based on the selected charging unit price, the registered allowable budget, and the registered advertising period, and then provides an advertisement for the registered product to a user terminal apparatus of the target customer group, based on the advertisement exposure frequency.

## Description

### CROSS-REFERENCE TO RELATED APPLICATION

This application claims priority to and the benefit of Korean Patent Application No.10-2016-0034661 filed in the Korean Intellectual Property Office on March 23, 2016 the entire contents of which are incorporated herein by reference.

### TECHNICAL FIELD

The present invention relates in general to technology for providing an advertisement and, more particularly, to an apparatus, method and recording medium for providing an advertisement.

### BACKGROUND

Details disclosed in this section merely offer background information regarding embodiments of the present invention. No determination has been made, and no assertion is made, as to whether any of the below might be applicable as prior art with regard to the present invention.

With the remarkable development of mobile communication technologies and related device technologies, today's mobile communication devices have outgrown a typical category of simple communication devices or information providing devices and are now evolving into total entertainment devices.

Especially, in these days, the use of a smart phone that combines a function of a communication terminal and a function of a personal digital assistant (PDA) has been popularized. This smart phone is an intelligent, advanced portable device that adds computer support functions, such as internet communication and information search, to a traditional mobile phone. Compared with a typical communication terminal, a smart phone has a large-capacity memory, a high-performance central processing unit (CPU), and an operating system (OS) for supporting the execution of various applications, voice/data communication, and interworking with a personal computer (PC).

The development of various mobile devices such as smart phones and tablet PCs and the expansion of a related application market are now causing an increase in a mobile-based online shopping mall market.

Over the past few years, mobile shopping mall sales have increased by a factor of several times, and also an advertising market for mobile shopping malls is expanding rapidly.

Normally, in a mobile shopping mall, a product for which an advertiser has paid an advertisement fee may be displayed, as a banner or text that can induce a link, on a main screen of a homepage. Additionally, when a user searches for a product, products that pay for advertising are displayed first at upper portions on the screen.

An advertiser wants an advertisement to induce a product sale. However, in the current mobile environments, numerous advertisements overflow. Therefore, advertising exposed to an unspecified number of users rarely leads to sales. For example, it is easy to imagine that the probability that an advertisement will lead to a purchase will be significantly different when the same shaver advertisement is sent to a male in his 30's and to a female in her 20'.

On the other hand, in order to measure the effectiveness of online advertising, evaluation indexes such as a click through rate (CTR), a conversion rate, a revenue of investment (ROI), an advertisement exposure count, and a click count are used.

In such online or mobile advertising, a way of paying advertisements to an advertisement provider is based on cost per click (CPC), cost per impression (CPM), cost per action (CPA), or the like.

By the way, it is common that a cost per click (PPC) paid by an advertiser is calculated through bidding with a number of other competitors. However, this may often invite very expensive advertisement cost regardless of actual effects. Namely, the existing advertisement unit price is determined in general by advertisers' bids without considering targeting customers of advertisements.

Accordingly, for a targeting advertisement, there are needs to provide an advertisement more reasonably based on a clear charging system that reflects advertising effects well, and to reduce an advertiser's burden of advertising cost.

### SUMMARY

In order to address the aforesaid or any other issue, the present invention provides an apparatus, method and recording medium for offering an advertisement more reasonably, based on a clear charging system.

Specifically, according to the present invention, an advertisement providing apparatus predefines charging unit prices per customer group and provides them to an advertiser terminal apparatus. Also, the advertiser terminal apparatus registers an allowable budget and an advertising period in the advertisement providing apparatus and selects one of the charging unit prices. And also, the advertisement providing apparatus calculates an advertisement exposure frequency and provides an advertisement to a customer group corresponding to the selected charging unit price.

Additionally, according to the present invention, the advertisement providing apparatus provides advertisement scenarios suitable for an advertiser, based on input information received from the advertiser terminal apparatus, and allows the advertiser terminal apparatus to select the most effective scenario so as to shorten a process of applying for an advertisement.

Namely, according to the present invention, an advertiser can select a suitable charging unit price and a suitable customer group, based on an allowable budget and an advertising period. Therefore, an advertisement can be provided, based on a suitable charging system and a suitable scenario desired by the advertiser.

According to embodiments of the present invention, a method for providing an advertisement at an advertisement providing apparatus may include steps of receiving, from an advertiser terminal apparatus, registration of a product to be advertised, an allowable budget, and an advertising period; setting a charging unit price per customer group as to the registered product; transmitting the charging unit price per customer group to the advertiser terminal apparatus and then receiving a selection of a target customer group and a charging unit price from the advertiser terminal apparatus; calculating an advertisement exposure frequency, based on the selected charging unit price, the registered allowable budget, and the registered advertising period; and providing an advertisement for the registered product to a user terminal apparatus of the target customer group, based on the advertisement exposure frequency.

The method may further include steps of periodically checking a customer group's reaction and, based on the selected charging unit price, calculating consumed advertisement cost; and periodically adjusting the advertisement exposure frequency as to a remaining advertising period, based on a remaining budget excluding the consumed advertisement cost from the allowable budget.

According to embodiments of the present invention, an advertisement providing apparatus may include a communication unit configured to receive, from an advertiser terminal apparatus, registration of a product to be advertised, an allowable budget, and an advertising period; and a control unit configured to set a charging unit price per customer group as to the registered product, to transmit the charging unit price per customer group to the advertiser terminal apparatus through the communication unit, to receive a selection of a target customer group and a charging unit price from the advertiser terminal apparatus through the communication unit, to calculate an advertisement exposure frequency, based on the selected charging unit price, the registered allowable budget, and the registered advertising period, and to provide an advertisement for the registered product to a user terminal apparatus of the target customer group, based on the advertisement exposure frequency.

In addition, embodiments of the present invention may provide a computer-readable recording medium having, recorded thereon, a program executing the above method.

According to this invention, the advertiser terminal apparatus may register a product to be advertised, an allowable budget, and an advertising period, and the advertisement providing apparatus may set a charging unit price per customer group as to the registered product. Also, the advertiser terminal apparatus may select a target customer group and a charging unit price, and the advertisement providing apparatus may calculate an advertisement exposure frequency, based on the selected charging unit price, the registered allowable budget, and the registered advertising period, and then provide an advertisement for the registered product to a user terminal apparatus of the target customer group, based on the advertisement exposure frequency.

Therefore, this invention may offer an advertisement more reasonably, based on a clear charging system. In addition, this invention may provide advertisement scenarios suitable for an advertiser, based on input information received from the advertiser terminal apparatus, and allow the advertiser to select the most effective scenario so as to shorten a process of applying for an advertisement.

The effects obtained in the present invention are not limited to the effects mentioned above, and other effects not mentioned can be clearly understood by those skilled in the art from the following description.

### BRIEF DESCRIPTION OF THE DRAWINGS

The accompanying drawings, which are included to provide a further understanding of the invention and are incorporated in and constitute a part of this specification, illustrate embodiments of the invention and, together with the description, serve to explain the technical features of the invention.
FIG. 1 is a schematic diagram illustrating the entire system for performing an advertisement providing method according to embodiments of the present invention.
FIG. 2 is a flow diagram illustrating an advertisement providing method according to embodiments of the present invention.
FIG. 3 is a block diagram illustrating an advertiser terminal apparatus for performing an advertisement providing method according to embodiments of the present invention.
FIG. 4 is a flow diagram illustrating operations of an advertiser terminal apparatus for performing an advertisement providing method according to embodiments of the present invention.
FIG. 5 is a block diagram illustrating an advertisement providing apparatus for performing an advertisement providing method according to embodiments of the present invention.
FIG. 6 is a flow diagram illustrating operations of an advertisement providing apparatus for performing an advertisement providing method according to embodiments of the present invention.
FIG. 7 is a block diagram illustrating operating environments of an apparatus for implementing an advertisement providing method according to an embodiment of the present invention.

### DETAILED DESCRIPTION

Now, embodiments of the present invention will be described with reference to the accompanying drawings.

In the following description and the accompanying drawings, however, well known techniques may not be described or illustrated in detail to avoid obscuring the subject matter of the present invention. Through the drawings, the same or similar reference numerals denote corresponding features consistently.

The terms and words used in the following description, drawings and claims are not limited to the bibliographical meanings and are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

The expression "1", "2", "first", or "second" used in various embodiments of this disclosure may modify various elements of such embodiments but does not limit the corresponding elements. The above expressions do not limit the sequence and/or importance of the elements but may be used for distinguishing one element from other elements. For example, a first device and a second device indicate different devices although both of them are devices. Meanwhile, without departing from the scope of the present disclosure, a first structural element may be referred to as a second structural element. Similarly, the second structural element also may be referred to as the first structural element.

When it is stated that a certain element is "coupled to" or "connected to" another element, the element may be directly coupled or connected to another element, or a new element may exist between both elements. In contrast, when it is stated that a certain element is "directly coupled to" or "directly connected to" another element, a new element does not exist between both elements.

The terms used in describing various embodiments of this disclosure are only examples for describing a specific embodiment but do not limit such embodiments. Singular forms are intended to include plural forms unless the context clearly indicates otherwise. Unless defined differently, all terms used herein, which include technical terminologies or scientific terminologies, have the same meaning as that understood by a person skilled in the art to which the present disclosure belongs. The terms "include", "comprise", and "have" as well as derivatives thereof, mean inclusion without limitation.

In addition, the term "module" or "unit" used herein may refer to an element for performing at least one function, operation, or task and may be implemented by software and/or hardware. A plurality of modules or units may be configured to reside on an addressable storage medium and configured to execute on one or more processors.

In addition, embodiments within the scope of the present invention include computer-readable media having computer-executable instructions or data structures stored on computer-readable media. Such computer-readable media can be any available media that is accessible by a general purpose or special purpose computer system.

By way of example, such computer-readable media may include, but not limited to, RAM, ROM, EPROM, CD-ROM or other optical disk storage, magnetic disk storage or other magnetic storage devices, or any other physical storage medium that can be used to store or deliver certain program codes formed of computer-executable instructions, computer-readable instructions or data structures and which can be accessed by a general purpose or special purpose computer system.

In the following description and claims, the term "network" is defined as one or more data links that enable electronic data to be transmitted between computer systems and/or modules. When any information is transferred or provided to a computer system via a network or other (wired, wireless, or a combination thereof) communication connection, this connection can be understood as a computer-readable medium.

The computer-readable instructions include, for example, instructions and data that cause a general purpose computer system or special purpose computer system to perform a particular function or group of functions. The computer-executable instructions may be binary, intermediate format instructions, such as, for example, an assembly language, or even source code.

In addition, the invention may be implemented in network computing environments having various kinds of computer system configurations such as PCs, laptop computers, handheld devices, multiprocessor systems, microprocessor-based or programmable consumer electronics, network PCs, minicomputers, mainframe computers, mobile phones, PDAs, pagers, and the like.

The invention may also be implemented in distributed system environments where both local and remote computer systems linked by a combination of wired data links, wireless data links, or wired and wireless data links through a network perform tasks. In such distributed system environments, program modules may be located in local and remote memory storage devices.

Now, an apparatus and method for providing an advertisement according to embodiments of this invention will be described with reference to accompanying drawings. Meanwhile, as understood by those skilled in the art, a computer-readable recording medium may record thereon a program for executing the method of this invention.

In the following description, a user refers to a person who receives a customer service (e.g., search, shopping, advertisement, etc.) provided by a web service server or an advertisement providing apparatus.

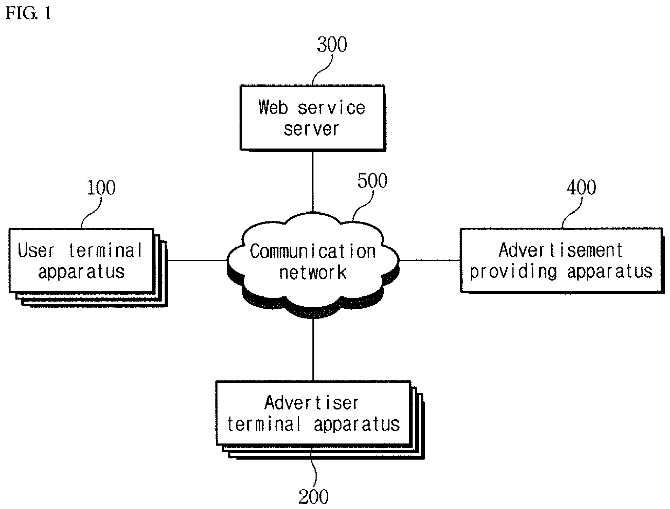

At the outset, the entire system associated with the present invention will be described with reference to FIG. 1.

FIG. 1 is a schematic diagram illustrating the entire system for performing an advertisement providing method according to embodiments of the present invention.

As shown in FIG. 1, an advertisement providing system according to this invention may include a user terminal apparatus 100, an advertiser terminal apparatus 200, a web service server 300, an advertisement providing apparatus 400, and a communication network 500.

The user terminal apparatus 100 according to embodiments of this invention may be a typical mobile communication terminal or device which is one of network entities capable of access to the communication network 500 and transmission or reception of data.

The user terminal apparatus 100 may be also referred to as user equipment (UE), a mobile station (MS), a mobile subscriber station (MSS), a subscriber station (SS), an advanced mobile station (AMS), a wireless terminal (WT), a machine-type communication (MTC) device, a machine-to-machine (M2M) device, a device-to-device (D2D) device, a station (STA), or the like.

This is, however, exemplary only and not to be construed as a limitation. Any equivalent for the above examples or any electronic device connectible to the communication network 500 of this invention may be used as the user terminal apparatus 100.

The user terminal apparatus 100 may perform voice or data communication using the communication network 500 and include a memory for storing a browser, a program and data, a microprocessor for executing and controlling various kinds of programs, and the like.

The user terminal apparatus 100 may be implemented in various forms. For example, the user terminal apparatus 100 may be one of a smart phone, a tablet PC, a laptop, a personal digital assistant (PDA), a portable multimedia player (PMP), an MP3 player, a smart TV, and the like.

Particularly, the user terminal apparatus 100 includes a web browser, module or application for accessing the web service server 300 and receiving a service (e.g., shopping, etc.) offered by the web service server 300.

Additionally, the user terminal apparatus 100 may receive an advertisement from the advertisement providing apparatus 400 directly or receive an advertisement displayed by the advertisement providing apparatus 400 when accessing the web service server 300.

Further, the user terminal apparatus 100 may transmit personal information, as a sort of customer information, to the web service server 300.

The advertiser terminal apparatus 200 is a terminal device used by an advertiser who desires to provide an advertisement to a user. The advertiser terminal apparatus 200 may have the same structure as the user terminal apparatus 100 has.

The advertiser terminal apparatus 200 may transmit information about a product for an advertisement, an allowable budget, and an advertising period to the advertisement providing apparatus 400. Also, the advertiser terminal apparatus 200 may receive information about a charging unit price per customer group from the advertisement providing apparatus 400 and offer information about a charging unit price selected by an advertiser to the advertisement providing apparatus 400.

The web service server 300 is a network entity for providing an online shopping service and various related services to a user through the network. The web service server 300 may receive a service packet requested from the user terminal apparatus 100 or the advertiser terminal apparatus 200 and also, in response to the received packet, transmit a response packet to the corresponding apparatus that sends the service packet.

The web service server 300 may be a web application server (WAS), an internet information server (IIS), or a well-known web or cache server using Apache Tomcat or Nginx. In addition, one of devices that constitute a network computing environment may be used as the web service server 300.

Also, the web service server 300 may support an operating system (OS) such as Linux or Windows and execute received control commands. In view of software, the web service server 300 may have a program module implemented by means of computer languages such as C, C++, Java, Visual Basic, Visual C, and the like.

Particularly, the web service server 300 may receive, from the advertisement providing apparatus 400, an advertisement to be provided to the user terminal apparatus 100. Also, the web service server 300 may provide an advertisement to the user terminal apparatus 100 when the user terminal apparatus 100 accesses the web service server 300.

The advertisement providing apparatus 400 is an electronic device for providing an advertisement to the user terminal apparatus 100. The advertisement providing apparatus 400 may collect, from the web service server 300, customer information and product information about a service offered by the web service server 300. Additionally, the advertisement providing apparatus 400 may receive and register information about a product for an advertisement, an allowable budget, and an advertising period from the advertiser terminal apparatus 200, and also set a charging unit price per customer group according to a given process. Further, the advertisement providing apparatus 400 may receive information about a selected customer group for an advertisement and a selected charging unit price from the advertiser terminal apparatus 200, and also provide an advertisement regarding the registered product to the user terminal apparatus 100 of the selected customer group.

Like the web service server 300, the advertisement providing apparatus 400 may be a web server or a cache server. Although both are separately illustrated in FIG. 1, the web service server 300 and the advertisement providing apparatus 400 may correspond to respective modules equipped in a single server.

Details of the advertisement providing apparatus 400 will be described below.

The web service server 300 may be connected to the user terminal apparatus 100 through the communication network 500 which refers to a network, such as Internet, Intranet, a mobile comununication network, a satellite communication network, or the like, capable of transmitting or receiving data, based on internet protocol and using various wired or wireless communication techniques.

Also, the communication network 500 may store computing resources such as hardware and software by combining with the web service server 300 or the user terminal apparatus 100. The communication network 500 may refer to a closed-type network such as LAN (Local Area Network) or WAN (Wide Area Network), an open-type network such as Internet, a network such as CDMA (Code Division Multiple Access), WCDMA (Wideband CDMA), GSM (Global System for Mobile communications), LTE (Long Term Evolution), or EPC (Evolved Packet Core), a next-generation network to be developed, and a computing network.

In addition, the communication network 500 includes a plurality of access networks (not shown) and a core network (not shown), and may further include an external network, e.g., Internet (not shown).

The access network is to perform wireless communication for mobile communication devices and may be formed of a plurality of base stations, also referred to as BTS (Base Transceiver Station), NodeB, or eNB (eNodeB or evolved Node B), and controllers such as BSC (Base Station Controller) and RNC (Radio Network Controller).

Additionally, instead of such a base station that includes a digital signal processor and a radio signal processor, a plurality of radio units (not shown) corresponding to the radio signal processor may be disposed respectively at a plurality of regions and connected to a centralized digital unit (not shown) corresponding to the digital signal processor.

The core network which forms a mobile network together with the access network performs a function to connect the access network and the external network such as Internet.

The core network is a network system that performs main functions for a mobile communication service such as mobility control and switching between the access networks. Namely, the core network performs circuit switching or packet switching and further manages and controls a packet flow in the mobile network.

In addition, the core network may manage mobility between frequencies, control traffic therein and in the access network, and control interworking with other network such as Internet. The core network may be formed of SGW (Serving GateWay), PGW (PDN GateWay), MSC (Mobile Switching Center), HLR (Home Location Register), MME (Mobile Mobility Entity), HSS (Home Subscriber Server), and/or the like.

The Internet is a worldwide common network through which information is exchanged according to the TCP/IP protocol. The Internet connected to the web service server 300 and the advertisement providing apparatus 400 may provide a service, offered by the web service server 300, to the user terminal apparatus 100 through the core network and the access network, and also provide an advertisement, offered by the advertisement providing apparatus 400, to the user terminal apparatus 100 along the same route. Additionally, the Internet may provide a service request, received from the user terminal apparatus 100, to the web service server 300 through the core network and the access network, and also provide an advertisement providing request of the advertiser terminal apparatus 200 to the advertisement providing apparatus 400 along the same route.

Meanwhile, a processor embedded in each apparatus or server according embodiments of this invention may process program instructions for executing the method of this invention. This processor may be a single-threaded processor or a multi-threaded processor. Also, this processor may process commands stored in a memory or any other storage.

Hereinbefore, the entire system for performing the advertisement providing method according to embodiments of this invention is described.

Now, a control flow of the advertisement providing method according to embodiments of this invention will be described.

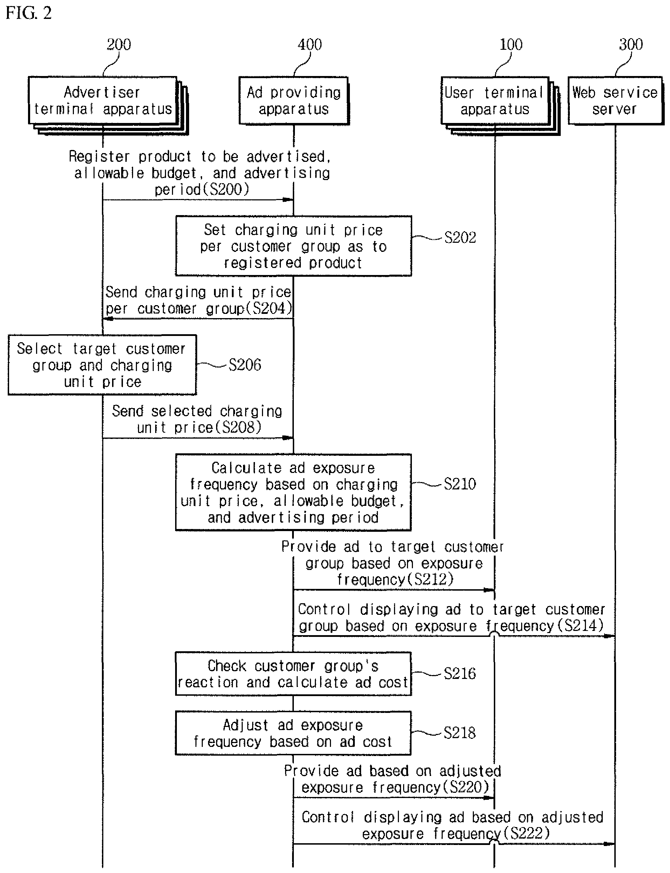

FIG. 2 is a flow diagram illustrating an advertisement providing method according to embodiments of the present invention.

According to embodiments of this invention, at step S200, the advertiser terminal apparatus 200 may register a product, to be advertised, in the advertisement providing apparatus 400. Also, at step S200, the advertiser terminal apparatus 200 may register an allowable budget and an advertising period in the advertisement providing apparatus 400.

Then, at step S202, the advertisement providing apparatus 400 sets a charging unit price per customer group with regard to the registered product.

This step of setting a charging unit price per customer group may be performed as follows.

At the outset, the advertisement providing apparatus 400 collects customer information and product information which will be used as basic information for calculating an expected response rate per customer group.

The customer information may be collected directly from the user terminal apparatus 100 that uses the web service server 300, or collected by requesting and receiving information stored in the web service server 300.

The customer information refers to information associated with a user who uses an online shopping service offered by the web service server 300. The customer information may include personal information and purchase history information for each customer.

The personal information refers to information for identifying each individual person. The personal information may contain an age, a sex, a residential area, etc. of a customer using the online shopping service.

The purchase history information refers to information for indicating each customer's purchasing characteristics. The purchase history information may contain a purchase cycle, a purchase frequency, discount sensitivity, average revenue per user (ARPU), and a purchase time zone.

The product information refers to information about products sold in the online shopping service offered by the web service server 300. The product information may contain the number of buyer comments per product, a purchase satisfaction per product, a sales quantity per period, and a rate of change in sales volume.

If any product to be advertised is registered in the advertisement providing apparatus 400 by an advertiser, the advertisement providing apparatus 400 calculates an expected response rate per customer group with regard to the registered product.

At this time, the expected response rate per customer group may be calculated by profiling data contained in the collected customer information and product information.

Profiling based on the customer information may be performed on the basis of the collected personal information and purchase history information. For example, customers having a similar purchase cycle for a specific product may be grouped, and/or customers having a similar purchase frequency for a specific product may be grouped. Similarly, based on the discount sensitivity, the ARPU, and/or the purchase time zone, contained in the purchase history information, customers may be grouped for profiling.

The result of profiling may be provided in the form of a business intelligence report, which may contain an absolute numeral, a relative importance, a tree map, etc. of customer groups per product.

Additionally, profiling based on the product information may be performed by analyzing the buyer comments per product, the number of such comments, and the purchase satisfaction per product which are contained in the product information. Also, by analyzing one or more of the sales quantity per period and the rate of change in sales volume, an estimated sales rate at the time of providing an advertisement may be calculated.

After the expected response rate per customer group is calculated, the advertisement providing apparatus 400 sets a charging unit price per customer group with regard to the registered product.

The charging unit price may be, for example, but not limited to, a pay per click (PPC). Alternatively, the charging unit price may be set using a cost per click (CPC), a cost per mille (CPM), or a cost per action (CPA).

Thereafter, at step S204, the advertisement providing apparatus 400 transmits the charging unit price per customer group to the advertiser terminal apparatus 200. Then the advertiser terminal apparatus 200 selects a target customer group, to which an advertisement will be provided, and a suitable charging unit price at step S206 and transmits selection information to the advertisement providing apparatus 400 at step S208.

Table 1 shows an example of customer groups and charging unit prices thereof which can be selected by the advertiser terminal apparatus 200.

**[Table 1]**

| Customer Group Population | Population Volume (person) | PPC (cent) |
|---|---|---|
| 20s women | 5,000 | 10 |
| 20s-30s women | 9,000 | 5 |
| All women | 30,000 | 1 |

If the product that an advertiser wishes to advertise is a product with a high expected response rate for young women, a customer group population according to the expected response rate can be calculated as shown in Table 1.

As shown in Table 1, the higher the expected response rate, the lower the population volume and the higher the charging unit price. Therefore, an advertiser may select a higher charging unit price to provide an advertisement only to a customer group having a high expected response rate, or select a lower charging unit price to provide an advertisement to several customer groups.

The selection of the charging unit price is based on a suitable policy, and may consider both the population volume and the expected response rate with regard to a target customer group.

The populations of customer groups shown in Table 1 are exemplary only and not construed as a limitation. The respective customer groups obtained by the above-mentioned profiling may be populations. Also, by comprehensively considering profiled data, certain customer groups expected to purchase the registered product at the time of providing an advertisement may be created as populations.

When the advertiser terminal apparatus 200 transmits information about the selected charging unit price to the advertisement providing apparatus 400, the advertisement providing apparatus 400 calculates an advertisement exposure frequency based on the selected charging unit price, the registered allowable budget, and the advertising period at step S210.

The calculation of the advertisement exposure frequency may be performed by calculating a consumable budget per day in accordance with the allowable budget and the advertising period and then calculating an expected consumption budget resulting from the exposure frequency per day based on the expected response rate according to the selected customer group and the selected charging unit price.

For example, if the consumable budget per day is 1,000 dollars, if the expected response rate is 10% according to the charging unit price selected by the advertiser terminal apparatus 200, and if the value of PPC is 10 cents, providing an advertisement ten times consumes 10 cents and thus the advertisement may be provided 100,000 times to consume 1,000 dollars per day.

In addition, an advertisement may be provided at a regular frequency during the day or provided differently by time or day depending on the characteristics of the selected customer group.

For example, an advertisement may be provided by concentrating on a specific time in consideration of a main purchase time zone of the selected customer group.

In another embodiment, in case of a product having different purchase cycles per day during the advertising period, the consumable budget may be calculated differently for each day, and thus the advertisement exposure frequency may be different for each day. If any discount occurs during the advertising period, the consumable budget may be set differently during a discount period.

Namely, the advertisement exposure frequency may be set differently according to the time or period, such as year, quarter, month, week, or day, in view of the characteristics of the customer group. Also, the advertisement providing apparatus 400 may set the advertisement exposure frequency to vary according to a certain time or period in view of the characteristics of the customer group.

The advertisement providing apparatus 400 may increase the advertisement exposure frequency by setting the consumable budget at a high level in a specific period having a higher expected response rate. Also, the advertisement providing apparatus 400 may reduce the advertisement exposure frequency by setting the consumable budget to the same.

When the advertisement exposure frequency is calculated, the advertisement providing apparatus 400 provides, based on the calculated advertisement exposure frequency, an advertisement for the registered product to the user terminal apparatus 100 of the customer group corresponding to the charging unit price selected by the advertiser terminal apparatus 200 at step S212.

At this time, the advertisement may be provided to the user terminal apparatus 100 of the customer group in a push manner. Also, when the user terminal apparatus 100 accesses the web service server 300, the advertisement may be provided to a certain region on a displayed web page at step S214.

Further, depending on the progress of the transmission of the advertisement, the population of customer group which is a target of the transmission of the advertisement may be adjusted through the calculation or an actual reaction rate.

Additionally, the advertisement providing apparatus 400 may check a customer group's reaction at regular intervals during the advertisement transmission period and calculate advertisement cost (a consumed budget in the allowable budget) consumed according to the charging unit price selected by the advertiser terminal apparatus 200 at step S216. In case of PPC, the calculation of advertisement cost may be performed, based on a PPC value selected by the advertiser and the number of clicks during the advertising period.

Then the advertisement providing apparatus 400 may adjust the advertisement exposure frequency for the remaining advertising period by considering both the consumed budget in the allowed budget and the remaining advertising period at step S218.

Thereafter, based on the adjusted exposure frequency, the advertisement providing apparatus 400 provides an advertisement for the registered product to the user terminal apparatus 100 of the customer group corresponding to the charging unit price selected by the advertiser terminal apparatus 200 at step S220.

At this time, the advertisement may be provided to the user terminal apparatus 100 of the customer group in a push manner or provided to a certain region on a displayed web page when the user terminal apparatus 100 accesses the web service server 300 at step S222.

Hereinbefore, the advertisement providing method according to an embodiment of this invention has been described.

Hereinafter, respective apparatuses for performing the advertisement providing method and their operations will be described.

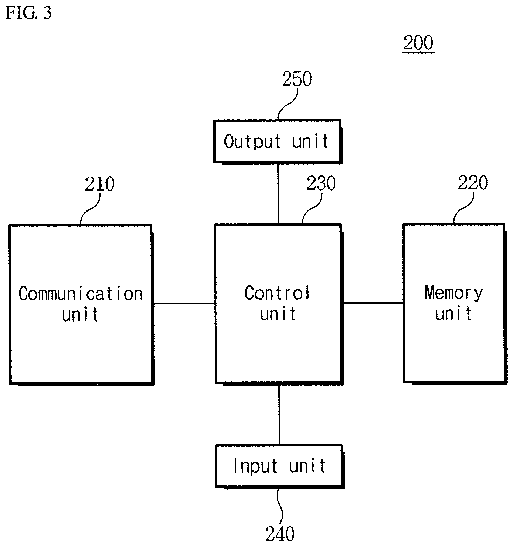

FIG. 3 is a block diagram illustrating an advertiser terminal apparatus for performing an advertisement providing method according to embodiments of the present invention.

Referring to FIG. 3, the advertiser terminal apparatus 200 may include a communication unit 210, a memory unit 220, a control unit 230, an input unit 240, and an output unit 250.

The communication unit 210 is configured to transmit or receive data to or from an external source. For example, the communication unit 210 may be formed of a logical combination of one or more software and/or hardware modules, such as a network interface card and a corresponding NDIS (Network Driver Interface Specification) stack.

The communication unit 210 may support various communication protocols. For example, various kinds of mobile communication standards such as AMPS, CDMA, GSM, WCDMA, HSDPA, LTE and LTE-A are supportable and also short range communication techniques such as BLE and Zigbee are supportable.

Particularly, the communication unit 210 may transmit and receive data to and from the web service server 300 through the communication network 500 and also may include a mobile communication module configured to perform access to the communication network 500 and data transmission/reception in compliance with mobile communication standards. Such data transmitted or received may include data associated with an online shopping service offered by the web service server 300 and data transmitted or received to or from the advertisement providing apparatus 400.

The memory unit 220 is configured to store data or program to be executed or processed by the control unit 230. Basically, the memory unit 220 may store an OS (Operating System) for booting the advertiser terminal apparatus 200 and operating the above-mentioned respective elements. Further, the memory unit 220 may store applications or programs for supporting various user functions, for example, a call function, a music player function, an image viewer function, a video playback function, and the like.

Particularly, the memory unit 220 may store a specific application or program required for performing the advertisement providing method according to this invention. Namely, the memory unit 220 may store a web browser or application for accessing an online shopping mall and also store a specific module or application for registering a product for an advertisement, an allowable budget and an advertising period in the advertisement providing apparatus 400 and for receiving, selecting and sending a charging unit price for the registered product.

The memory unit 220 may include magnetic media (such as a hard disk, a floppy disk, and a magnetic tape), optical medium (such as CD-ROM (Compact Disk Read Only Memory) and DVD (Digital Video Disk)), magneto-optical media (such as a floptical disk), ROM, RAM (Random Access Memory), and/or a flash memory.

The control unit 230 is configured to perform the whole control of the advertiser terminal apparatus 200 and may include one or more processors. This processor may be a single-threaded processor or a multi-threaded processor.

Through such one or more processors, the control unit 230 may perform or process a command stored in the memory unit 220. This command may include an analyzable command such as a script command (e.g., JavaScript or ECMAScript), an executable code, or any other command recorded in a computer-readable medium.

Particularly, the control unit 230 may control the communication unit 210 to transmit or receive information to or from the web service server 300 by using an application stored in the memory unit 220. Namely, the control unit 230 operates in compliance with service logic of an application or program stored in the memory unit 220 and thereby performs the advertisement providing method according to this invention.

According to embodiments of this invention, while communicating with the advertisement providing apparatus 400 through the communication unit 210, the control unit 230 registers a product to be advertised, an allowable budget and an advertising period in the advertisement providing apparatus 400, receives a charging unit price per customer group from the advertisement providing apparatus 400, and transmits a charging unit price selected by an advertiser to the advertisement providing apparatus 400.

The input unit 240 is configured to receive an advertiser's input. Namely, the input unit 240 creates an input signal in response to an advertiser's manipulation and then delivers the created input signal to the control unit 230.

The input unit 240 may be formed of various well-known input mechanisms, e.g., a keyboard, a mouse, a joystick, a jog wheel, a touch screen, a touch pad, and the like. Also, the input unit 240 may further include a gesture input mechanism, a voice recognition mechanism, a motion detection mechanism, an eye tracking mechanism, a proximity sensor mechanism, and the like.

The input unit 240 may be connected to the control unit 230 through a system bus and an input/output interface.

The input/output interface may be at least one of various feasible interfaces such as a serial port interface, a PS/2 interface, a parallel port interface, a USB interface, an IEEE (Institute of Electrical and Electronics Engineers) 1394 interface (i.e., a FireWire interface), and the like, or any combination thereof.

The output unit 250 is configured to offer an operating result or status of the advertiser terminal apparatus 100 to an advertiser. Particularly, the output unit 250 may visually output information through a display mechanism.

For example, the output unit 250 may be formed of various kinds of a 2-dimensional display such as ELD (Electro Luminescent Display), VFD (Vacuum Fluorescent Display), LCD (Liquid Crystal Display), TFT-LCD (Thin Film Transistor LCD), LED (Light Emitting Diode), OLED (Organic LED), and AMOLED (Active Matrix OLED), or a 3-dimensional display such as holography and a laser beam.

The output device 250 may be connected to the control unit 230 through a video interface such as HDMI (High Definition Multimedia Interface) or GDI (Graphics Device Interface). The control unit 230 and the video interface may be connected to each other via a system bus.

Particularly, the output unit 250 may be used to display information received from the web service server 300, especially, an interface for registering a product to be advertised or selecting a charging unit price.

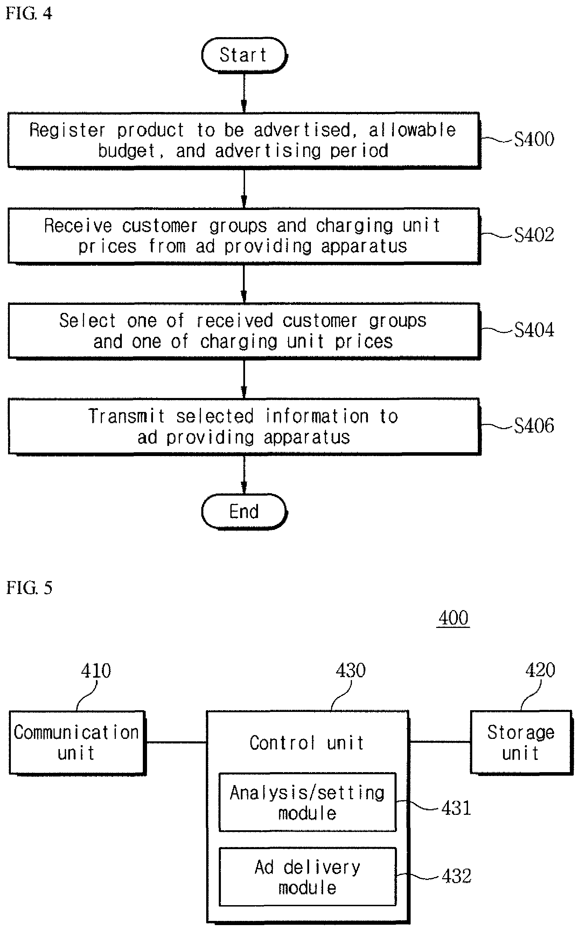

FIG. 4 is a flow diagram illustrating operations of the advertiser terminal apparatus 400 for performing an advertisement providing method according to embodiments of the present invention.

Referring to FIG. 4, at step S400, the advertiser terminal apparatus 200 receives an input regarding a product to be advertised, an allowable budget, and an advertising period, and then registers the received input regarding a product to be advertised, an allowable budget, and an advertising period in the advertisement providing apparatus 400.

Then, at step S402, the advertiser terminal apparatus 200 receives, from the advertisement providing apparatus 400, customer groups for a target advertisement and charging unit prices for the customer groups which are set by the advertisement providing apparatus 400.

At step S404, based on an advertiser's input, the advertiser terminal apparatus 200 selects one of the received customer groups and also selects a corresponding charging unit price from among the received charging unit prices.

Then, at step S406, the advertiser terminal apparatus 200 transmits information about the selected customer group and the selected charging unit price to the advertisement providing apparatus 400.

As discussed above, the advertiser terminal apparatus 200 merely perform steps of registering a product, to be advertised, in the advertisement providing apparatus 400 and selecting a desired customer group and corresponding charging unit price.

While a typical charging system based on a bidding mechanism causes an advertiser to spend a long time for bidding and to consume a lot of cost compared to the advertisement effect, this invention may offer convenience to an advertiser by minimizing steps performed at the advertiser terminal apparatus 200.

Hereinbefore, the structure and operations of the advertiser terminal apparatus 200 according to embodiments of this invention are described.

Hereinafter, the structure and operations of the advertisement providing apparatus 400 according to embodiments of this invention will be described.

FIG. 5 is a block diagram illustrating the advertisement providing apparatus 400 for performing an advertisement providing method according to embodiments of the present invention.

Referring to FIG. 5, the advertisement providing apparatus 400 may include a communication unit 410, a storage unit 420, and a control unit 430.

The communication unit 410 is configured to transmit or receive data to or from an external source. The communication unit 410 performs a function of communication with the user terminal apparatus 100, the advertiser terminal apparatus 200 and the web service server 300 each of which is connected through the communication network 500.

The communication unit 410 may collect customer information and product information from the user terminal apparatus 100 or the web service server 300. The collected information is stored in the storage unit 420.

Additionally, the communication unit 410 may receive information about a product to be advertised, an allowable budget and an advertising period from the advertiser terminal apparatus 200, provide a charging unit price per customer group created through a series of processing procedure to the advertiser terminal apparatus 200, and receive information about a target customer group and a related charging unit price selected by the advertiser terminal apparatus 200.

Also, the communication unit 410 may provide, to the target customer group, an advertisement as to a product registered by the advertiser terminal apparatus 200.

As discussed above, such an advertisement may be transmitted to the user terminal apparatus 100 directly or via the web service server 300.

Meanwhile, in case the web service server 300 and the advertisement providing apparatus 400 form a single hardware, customer information and product information may be collected without any connection with the communication network 500.

The storage unit 420 may store a program for performing the advertisement providing method according to embodiments of this invention. Also, the storage unit 420 may store customer information and product information collected from the user terminal apparatus 100 or the web service server 300.

In addition, various kinds of information associated with embodiments of this invention may be stored such as an expected response rate per customer group, a charging unit price per customer group, and a user-selected charging unit price. This information may be stored in the form of database, and thus the advertisement providing apparatus 400 may further include a database management system.

The control unit 430 is configured to control the advertisement providing apparatus 400 to perform the advertisement providing method. The control unit 430 may be implemented as one or more processors. This processor may be a single-threaded processor or a multi-threaded processor.

Additionally, the control unit 430 may perform or process a command stored in the storage unit 420. This command may include an analyzable command such as a script command (e.g., JavaScript or ECMAScript), an executable code, or any other command recorded in a computer-readable medium.

In particular, the control unit 430 may include an analysis/setting module 431 and an advertisement delivery module 432.

In this disclosure, the term "module" may refer to an element which is formed of software, hardware, or combination thereof, and performs certain tasks. A module may be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The analysis/setting module 431 creates profiling data, based on customer information and product information stored in the storage unit 420, and calculates an expected response rate per customer group as to a product registered by the advertiser terminal apparatus 200.

Also, the analysis/setting module 431 sets a charging unit price per customer group, based on the calculated expected response rate. The charging unit price may be, for example, but not limited to, a pay per click (PPC). Alternatively, the charging unit price may be set using a cost per click (CPC), a cost per mille (CPM), or a cost per action (CPA).

The analysis/setting module 431 controls the communication unit 410 to transmit the charging unit price per customer group to the advertiser terminal apparatus 200. When information about the target customer group and related charging unit price is received from the advertiser terminal apparatus 200 through the communication unit 410, the analysis/setting module 431 controls the storage unit 420 to store the received information.

Further, the analysis/setting module 431 calculates an advertisement exposure frequency, based on the product to be advertised, the allowable budget, and the advertising period.

Meanwhile, the advertisement delivery module 432 is configured to provide an advertisement, registered by the advertiser terminal apparatus 200, to the user terminal apparatus 100. The advertisement delivery module 432 may provide an advertisement, based on various kinds of information stored in the storage unit 420 such as the registered product, the target customer group as to the registered product, the selected charging unit price, and/or the calculated advertisement exposure frequency.

Although not shown, the advertisement providing apparatus 400 may further include an input unit and an output unit which are used widely in a normal computing apparatus.

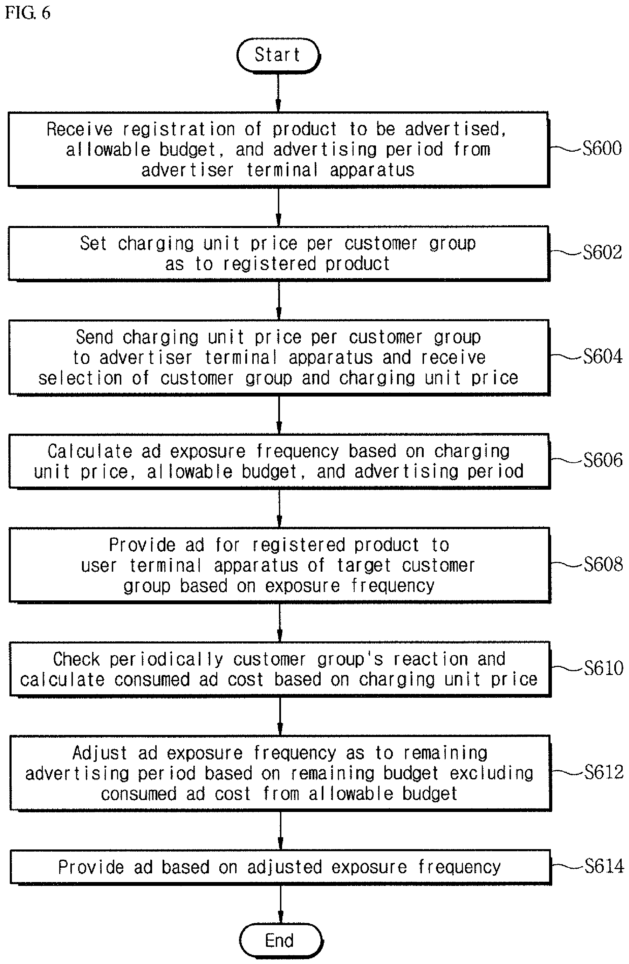

FIG. 6 is a flow diagram illustrating operations of the advertisement providing apparatus 400 according to embodiments of the present invention.

Referring to FIG. 6, at step S600, the advertisement providing apparatus 400 receives, from the advertiser terminal apparatus, registration of a product to be advertised, an allowable budget, and an advertising period.

Then, at step S602, the advertisement providing apparatus 400 sets a charging unit price per customer group as to the registered product. As mentioned above, the charging unit price may be set using a pay per click (PPC), a cost per click (CPC), a cost per mille (CPM), or a cost per action (CPA).

Then, at step 604, the advertisement providing apparatus 400 transmits the charging unit price per customer group, which is set at step S602, to the advertiser terminal apparatus 200 and receives a selection of a target customer group and a related charging unit price from the advertiser terminal apparatus 200.

Then, at step S606, the advertisement providing apparatus 400 calculates an advertisement exposure frequency, based on the selected charging unit price, the registered allowable budget, and the registered advertising period.

At this step, the advertisement exposure frequency may calculated by finding the total exposable counts, based on the registered allowable budget and the selected charging unit price, and then dividing the total exposable counts by the advertising period.

Alternatively, the advertisement exposure frequency may be set differently according to the time or period, such as year, quarter, month, week, or day, in view of the characteristics of the customer group.

Thereafter, at step S608, the advertisement providing apparatus 400 provides an advertisement for the registered product to the user terminal apparatus 100 of the target customer group, based on the calculated exposure frequency.

At this step, the advertisement may be provided to the user terminal apparatus 100 of the target customer group in a push manner. If the user terminal apparatus 100 accesses the web service server 300, the advertisement may be provided to a certain region on a displayed web page.

Additionally, the advertisement providing apparatus 400 may periodically check a customer group's reaction and, based on the selected charging unit price, calculate consumed advertisement cost at step S610. Further, the advertisement providing apparatus 400 may periodically adjust the advertisement exposure frequency as to the remaining advertising period at step S612, based on the remaining budget excluding the consumed advertisement cost from the allowable budget, and then provide the advertisement at step S614, based on the adjusted exposure frequency.

If there is no remaining budget since the consumed advertisement cost is equal to or exceeds the allowable budget, the advertisement providing apparatus 400 may stop providing the advertisement.

Heretofore, the operations of the advertisement providing apparatus 400 are described through a flow diagram.

This invention includes a program for performing the above-discussed radio fingerprint map construction and location tracking method. This program may be recorded in a storage medium and also may perform the aforesaid functions by being installed, read and executed in and by a computer.

These programs may include codes in programming languages such as C, C++, JAVA and machine codes readable by a computer processor or CPU so that the computer reads the programs recorded in recording media to conduct the foregoing functionalities.

Namely, the codes may include, but not limited to, computer languages such as data-oriented languages (e.g., SQL, dBase), system languages (e.g., C, Objective C, C++, Assembly), architectural languages (e.g., Java, NET), and application languages (e.g., PHP, Ruby, Perl, Python), or any other language well known in the art.

The codes may include functional codes related to functions defining the aforementioned functionalities and control codes related to an execution procedure needed for the computer processor to execute the functionalities according to a preset procedure.

Further, the codes may further include memory reference related codes regarding additional information needed for the computer processor to perform the functionalities or a location or address of an internal or external memory that media refer to.

In addition, when the computer processor needs communications with a remote computer or server to perform the functionalities, the codes may further include communication related codes regarding how the computer processor communicates with which remote computer or server using a wire-based and/or wireless communication module and what kind of information or media the computer processor transmits or receives in communications.

The computer-readable storage medium suitable for storing computer program commands and data may include magnetic media such as a hard disk, a floppy disk and a magnetic tape, optical media such as CD-ROM (Compact Disk Read Only Memory) and DVD (Digital Video Disk), magneto-optical media such as a floptical disk, and semiconductor memories such as ROM (Read Only Memory), RAM (Random Access Memory), flash memory, EPROM (Erasable Programmable ROM) and EEPROM (Electrically EPROM). A processor and memory may be supplemented by a special-purpose logic circuit or integrated therewith.

Further, the computer-readable recording media including the programs may be distributed to a computer system connected via a network, and accordingly computer-readable codes may be stored and implemented in distributed mode.

Functional programs, relevant codes and code segments to implement the present invention may be readily inferred or modified by programmer skilled in the art in view of a system configuration of the computer that reads the recording media to execute the programs.

Respective steps in embodiments of this invention may be implemented in computer-executable commands and executed by a computing system. This computing system is defined as one or more software modules, one or more hardware module, or combinations thereof, that work together to perform operations on electronic data.

For example, the definition of computer system includes the hardware components of a personal computer, as well as software modules, such as the operating system of the personal computer. The physical layout of the modules is not important. A computer system may include one or more computers coupled via a network.

Likewise, a computer system may include a single physical device where internal modules, such as a memory and processor, work together to perform operations on electronic data.

Implementations may be implemented in a computing system that includes a back-end component, e.g., a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network.

Namely, a device or apparatus for performing the radio fingerprint map construction and location tracking method according to this invention may be implemented to perform the above-discussed embodiments based on a computing system to be described hereinafter.

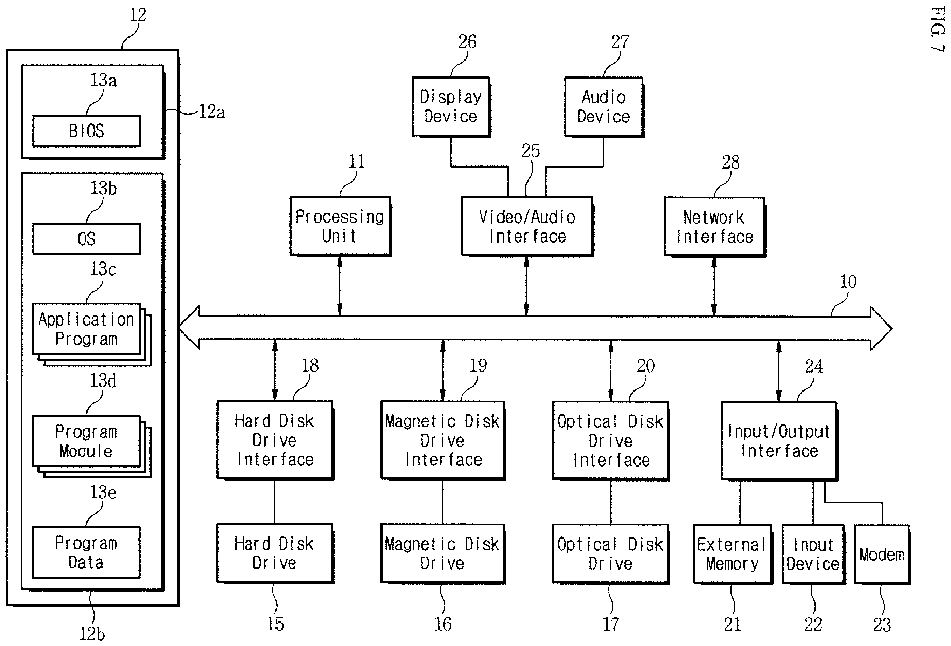

FIG. 7 is a block diagram illustrating operating environments of an apparatus, i.e., the advertiser terminal apparatus 200 or the advertisement providing apparatus 400, for implementing an advertisement providing method according to an embodiment of the present invention.

FIG. 7 and the following discussion are intended to provide a brief, general description of an example suitable computing environment in which the invention may be implemented. Although not required (e.g., when implemented in hardware), the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

Referring to FIG. 7, an exemplary computing system for implementing the invention includes a processing unit 11, a system memory 12, and a system bus 10 that couples various system components including the system memory 12 to the processing unit 11.

The processing unit 11 can execute computer-executable instructions designed to implement features of this invention.

The system bus 10 may be any of several, types of bus structures including a memory bus or memory controller, a peripheral bus, and a local bus using any of a variety of bus architectures. The system memory 12 includes read only memory (ROM) 12a and random access memory (RAM) 12b. A basic input/output system (BIOS) 13a, containing the basic routines that help transfer information between elements within computer system, such as during start-up, may be stored in the ROM 12a.

The computing system may also include a storage unit, e.g., a hard disk drive 15 for reading from and writing to a hard disk, a magnetic disk drive 16 for reading from or writing to a magnetic disk, and an optical disk drive 17 for reading from or writing to an optical disk such as a CD-ROM or other optical media. The hard disk drive 15, the magnetic disk drive 16, and the optical disk drive 17 are connected to the system bus 10 by a hard disk drive interface 18, a magnetic disk drive-interface 19, and an optical drive interface 20, respectively.

Additionally, the computing system may further include an external memory 21 as the storage unit. The external memory 21 may be connected to the system bus 10 through an input/output interface 24.

The drives and their associated computer-readable media provide nonvolatile storage of computer-executable instructions, data structures, program modules, and other data for the computing system. Although the example environment described herein employs the hard disk 15, the magnetic disk 16 and the optical disk 17, other types of computer readable media for storing data can be used, including magnetic cassettes, flash memory cards, digital versatile disks, Bernoulli cartridges, RAMs, ROMs, and the like.

Program code means including one or more program modules, such as an operating system 13b, one or more application programs 13c, other program modules 13d, and program data 13e, may be stored on the hard disk 15, the magnetic disk 16, the optical disk 17, the ROM 12a, or the RAM 12b.

A user may enter commands and information into the computing system through other input device 22 such as a keyboard, a pointing device, a microphone, a joy stick, a game pad, or the like. This other input device 22 can be connected to the processing unit 11 through the input/output interface 24 coupled to the system bus 10. The input/output interface 24 may logically represent any of a wide variety of different interfaces, such as, for example, a serial port interface, a PS/2 interface, a parallel port interface, a universal serial bus (USB) interface, or an institute of electrical and electronics engineers (IEEE) 1394 interface (i.e., a FireWire interface), or may even logically represent a combination of different interfaces.

Additionally, the computing system may further include a display device 26 such as a monitor or LCD and/or an audio device 27 such as a speaker or a microphone, which are connected to the system bus 10 via a video/audio interface 25. The video/audio interface 25 may include high definition multimedia interface (HDMI), graphics device interface (GDI), or the like.

The computing system is connectable to networks, such as, for example, an office-wide or enterprise-wide computer network, a home network, an intranet, and/or the Internet. The computing system can exchange data with external sources, such as, for example, remote computer systems, remote applications, and/or remote databases over such networks.

The computing system includes a network interface 28, through which the computing system receives data from external sources and/or transmits data to external sources. The network interface 28 facilitates the exchange of data with remote devices. For example, if the computing system is the advertiser terminal apparatus 200, this apparatus 200 may transmit or receive information to or from the advertisement providing apparatus 400 through the network interface 28. If the computing system is the advertisement providing apparatus 400, this apparatus 400 may transmit or receive information to or from the advertiser terminal apparatus 200 through the network interface 28. The network interface 28 can logically represent one or more software and/or hardware modules, such as, for example, a network interface card and corresponding network driver interface specification (NDIS) stack. Likewise, the computing system receives and/or transmits data from and/or to external sources through the input/output interface 24. The input/output interface 24 is coupled to a modem 23 (e.g., a standard modem, a cable modem, or a digital subscriber line (DSL) modem), through which the computing system receives data from and/or transmits data to external sources.

While FIG. 7 represents a suitable operating environment for the present invention, the principles of the present invention may be employed in any system that is capable of, with suitable modification if necessary, implementing the principles of the present invention. The environment illustrated in FIG. 7 is illustrative only and by no means represents even a small portion of the wide variety of environments in which the principles of the present invention may be implemented.

Various kinds of information created during the execution of an advertisement providing program of this invention may be stored and accessed from any of the computer-readable media associated with the computing system as shown in FIG. 7. For example, portions of such modules and portions of associated program data may be included in the operating system 13b, the application programs 13c, the program modules 13d and/or the program data 13e, for storage in the system memory 12.

When a mass storage device such as the hard disk is coupled to the computing system, such modules and associated program data may also be stored in the mass storage device. In a networked environment, program modules depicted relative to the computing system, or portions thereof, can be stored in a remote computer system connected through the modem 23 or network interface 25 of the input/output interface 24. Execution of such modules may be performed in a distributed environment as previously described.

While the specification contains many specific implementation details, these should not be construed as limitations on the scope of any disclosure or of what may be claimed, but rather as descriptions of features that may be specific to particular embodiments of particular disclosures. Certain features that are described in the specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Also, although the present disclosure describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous. Also, it should not be construed that the division of various system components are required in all types of implementation. It should be understood that the described program components and systems are generally integrated as a single software product or packaged into a multiple-software product.

While this disclosure has been particularly shown and described with reference to an exemplary embodiment thereof, it will be understood by those skilled in the art that various changes in form and details may be made therein without departing from the scope of this disclosure as defined by the appended claims.

This invention has a good possibility of sales on the market or business and also has industrial applicability suitable for practical and apparent implementation.

## Claims

1. A method for providing an advertisement at an advertisement providing apparatus, the method comprising steps of:
receiving, from an advertiser terminal apparatus, registration of a product to be advertised, an allowable budget, and an advertising period;
setting a charging unit price per customer group as to the registered product;
transmitting the charging unit price per customer group to the advertiser terminal apparatus and then receiving a selection of a target customer group and a charging unit price from the advertiser terminal apparatus;
calculating an advertisement exposure frequency, based on the selected charging unit price, the registered allowable budget, and the registered advertising period; and
providing an advertisement for the registered product to a user terminal apparatus of the target customer group, based on the advertisement exposure frequency.

2. The method of claim 1, wherein the calculating step includes:
finding total exposable counts, based on the registered allowable budget and the selected charging unit price; and
dividing the total exposable counts by the registered advertising period so as to calculate the advertisement exposure frequency.

3. The method of claim 1, wherein the calculating step includes:
setting differently the advertisement exposure frequency according to a specific time or period including one of year, quarter, month, week and day in view of characteristics of the customer group.

4. The method of claim 1, further comprising steps of:
periodically checking a customer group's reaction and, based on the selected charging unit price, calculating consumed advertisement cost; and
periodically adjusting the advertisement exposure frequency as to a remaining advertising period, based on a remaining budget excluding the consumed advertisement cost from the allowable budget.

5. The method of claim 4, wherein the adjusting step includes:
if the consumed advertisement cost is equal to or exceeds the allowable budget, stopping provision of the advertisement.

6. The method of claim 1, wherein the setting step includes:
collecting customer information and product information;
calculating an expected response rate per customer group as to the registered product, based on the customer information and the product information; and
setting the charging unit price per customer group, based on the expected response rate per customer group.

7. A computer-readable recording medium having, recorded thereon, a program executing the method of claim 1.

8. An advertisement providing apparatus comprising:
a communication unit configured to receive, from an advertiser terminal apparatus, registration of a product to be advertised, an allowable budget, and an advertising period; and
a control unit configured to:
set a charging unit price per customer group as to the registered product,
transmit the charging unit price per customer group to the advertiser terminal apparatus through the communication unit,
receive a selection of a target customer group and a charging unit price from the advertiser terminal apparatus through the communication unit,
calculate an advertisement exposure frequency, based on the selected charging unit price, the registered allowable budget, and the registered advertising period, and
provide an advertisement for the registered product to a user terminal apparatus of the target customer group, based on the advertisement exposure frequency.

9. The advertisement providing apparatus of claim 8, wherein the control unit is further configured to:
periodically check a customer group's reaction,
calculate consumed advertisement cost, based on the selected charging unit price, and
periodically adjust the advertisement exposure frequency as to a remaining advertising period, based on a remaining budget excluding the consumed advertisement cost from the allowable budget.
